# EUROPÄISCHE PATENTSCHRIFT

(11) **EP 0 979 324 B1**
(45) Veröffentlichungstag und Bekanntmachung des Hinweises auf die Patenterteilung: **04.12.2002**
(21) Anmeldenummer: 98925487.5
(22) Anmeldetag: 27.04.1998
(51) Int. Cl.: D04H 1/58, C09J 133/08, D06N 3/00, B32B 5/02, C14B 7/00, D21H 13/34

(54) **THERMOPLASTISCHES VERBUNDMATERIAL**
THERMOPLASTIC COMPOSITE MATERIAL
MATERIAU COMPOSITE THERMOPLASTIQUE

(30) Priorität: 02.05.1997 DE 19718633
(43) Veröffentlichungstag der Anmeldung: 16.02.2000
(73) Patentinhaber: Henkel Dorus GmbH & Co. KG, 73441 Bopfingen (DE)
(72) Erfinder: LORENZ, Jürgen, D-73441 Bopfingen (DE); WILKA, Ewald, D-73485 Unterschneidheim (DE)
(74) Vertreter: Mathes, Nikolaus, Dr.
(86) Internationale Anmeldenummer: EP9802486
(87) Internationale Veröffentlichungsnummer: WO98050617

(56) Entgegenhaltungen:
- DE-A- 2 754 603
- GB-A- 1 040 572
- GB-A- 1 105 317
- GB-A- 1 396 188
- DATABASE WPI Section Ch, Week 9637 Derwent Publications Ltd., London, GB; Class A18, AN 96-365617 XP002077018 & JP 08 173206 A (OJI PAPER CO) , 9. Juli 1996
- DATABASE WPI Section Ch, Week 8646 Derwent Publications Ltd., London, GB; Class A14, AN 86-302823 XP002077019 & JP 61 225378 A (DAINIPPON INK & CHEM KK) , 7. Oktober 1986

## Beschreibung

Die Erfindung betrifft ein thermoplastisches Verbundmaterial, enthaltend ein organisches Fasermaterial oder ein Gemisch aus zwei oder mehr organischen Fasermaterialien, sowie ein thermoplastisches Bindemittel. Weiterhin betrifft die Erfindung ein Verfahren zur Herstellung eines solchen thermoplastischen Verbundmaterials. Die Erfindung betrifft die Verwendung eines solchen Verbundmaterials zur Beschichtung von Oberflächen von Gegenständen, sowie die damit beschichteten Gegenstände. Ebenfalls Gegenstand der Erfindung ist ein Klebstoff, der zur Verbindung des Verbundmaterials mit dem zu beschichtenden Gegenstand dient.

Verbundmaterialien, auch Verbundwerkstoffe genannt, sind Werkstoffe, die durch Einlagerung eines beispielsweise in Form von Fasern vorliegenden Grundwerkstoffs in einen zweiten Stoff (die Matrix) entstehen. Dabei werden bestimmte Eigenschaften (beispielsweise mechanische Eigenschaften, Oberflächeneigenschaften, oder bestimmtes Verhalten gegenüber äußeren Einflüssen) des eingelagerten Stoffes für den Verbundwerkstoff genutzt. Der Grundwerkstoff kann dabei in seinem Mengenverhältnis zur ihn umschließenden Matrix weit variieren. So beträgt der Matrixanteil in Holzwerkstoffen, zu denen beispielsweise die bekannten Preßspanplatten gehören, in der Regel lediglich 10 - 15 %. Demgegenüber kann der Matrixanteil in faserverstärkten Kunststoffen, beispielsweise in glasfaserverstärkten Kunststoffen, bedeutend höher liegen, etwa bei über 70 oder über 80 %.
Häufig gelingt es, dem Verbundwerkstoff durch geeignete Wahl von Grundwerkstoff und Matrix bestimmte Eigenschaften des Grundwerkstoffs zu verleihen, die mit bestimmten Eigenschaften der Matrix gepaart sind. So kann beispielsweise die Verwendung von Glas- oder Naturstoffasern in duromeren Kunststoffen eine Übertragung der Zugfestigkeit der Fasern auf die Kunststoffmatrix bewirken, die ihrerseits wiederum Vorteile bezüglich Formgebung, Formstabilität und Verarbeitbarkeit zum Verbundwerkstoff beisteuert.

Häufig dient die Herstellung von Verbundwerkstoffen dazu, aus Nebenprodukten, die bei der Verarbeitung eines bestimmten Grundwerkstoffs anfallen, ein Material herzustellen, das charakteristische Eigenschaften des Grundwerkstoffs aufweist. Das entsprechende Verbundmaterial läßt sich dann in der Regel zumindest als Ersatzmaterial für den Grundwerkstoff einsetzen, und erlaubt damit eine "stoffbezogene" Verwertung der Grundwerkstoffabfälle bzw. -nebenprodukte. Dies ist beispielsweise bei der Verwertung von Holzabfällen in Preßspanplatten der Fall. Ein weiteres Beispiel für eine stoffbezogene Verwertung von Abfallprodukten stellt die Verarbeitung von Beschneide- und Stanzabfällen aus der Leder- und Schuhproduktion zu Lederfaserwerkstoffen dar.

Lederabfälle können zerfasert werden und lassen sich dann zu Lederfaserwerkstoffen (LEFA) verarbeiten. Bei LEFA handelt es sich um in der Regel einschichtige Flächengebilde aus Lederfasern und Bindemitteln. Schon Ende der dreißiger Jahre wurden LEFA-Platten in der Schuhindustrie eingesetzt, beispielsweise zur Herstellung von Hinterkappen, Brand- und Zwischensohlen, Hausschuhsohlen, Absätzen und Rahmen. In geringem Umfang wurden die LEFA-Werkstoffe auch für technische Lederdichtungen eingesetzt.

GB-A-1 396 188 offenbart die Verwendung von Fasern aus Lederabfällen, wobei ein Bindemittel nach dem Trocknen der Schicht imprägniert wird. Die JP-A-61225378, offentbart eine lederähnliche Verbindung, wobei acrylathaltige Bindemittel mittels Emulsion eingesetzt werden. Die faserige Substanz wird mittels eines Pulvers von 5-200 mesh eingesetzt.

Neben Eigenschaften wie Flexibilität und Strapazierbarkeit, die Leder für eine Anwendung in der Schuh- oder Täschnerwarenindustrie qualifizieren, wird Leder zunehmend in anderen Bereichen eingesetzt, in denen hauptsächlich die dekorativen Merkmale des Leders zum Tragen kommen. Die Verwendung von Leder als Oberflächenmaterial für Möbelfronten, Wand- oder Deckenpaneelen oder anderen Gebrauchsgegenständen war bislang jedoch schwierig oder sogar unmöglich. Insbesondere war die Verwendung von Leder als Oberflächenmaterial für Gegenstände mit einer dreidimensionalen Reliefstruktur nur unter erheblichem Aufwand realisierbar.

Da Leder keine thermoplastischen Eigenschaften aufweist, ist es als Oberflächenbeschichtungsmaterial nur bedingt einsetzbar. Insbesondere ist es schwierig, wechselnde dreidimensionale Reliefstrukturen in einem rationellen Verfahren mit einer glatten Lederoberfläche zu versehen.

Solche rationellen Verfahren zur Beschichtung von reliefartigen Oberflächen von Formkörpern sind beispielsweise aus der Folienbeschichtungsindustrie bekannt. Hierbei wird in der Regel ein Formkörper (Gegenstand) mit einer thermoplastischen Kunststoffolie beschichtet, indem Formkörper und Kunststoffolie auf eine Temperatur oberhalb der Fließübergangsgrenze der Kunststoffolie erhitzt werden und die Folie auf geeignete Weise (beispielsweise durch Anlegen eines Vakuums zwischen Formkörper und Kunststoffolie) auf den Formkörper aufgezogen wird (Tiefziehverfahren). In der Regel sorgt ein Klebstoff für eine dauerhafte Verbindung zwischen Kunststoffolie und Formkörper.

Ein solches, rationell mit maschineller Unterstützung ausführbares Verfahren erfordert jedoch eine thermoplastische Kunststoffolie als Beschichtungsmaterial. Bislang war es aber nicht möglich, lederähnliche Ersatzmaterialien, beispielsweise LEFA, so auszurüsten, daß sie zum einen die thermoplastischen Eigenschaften aufweisen, die für einen Einsatz in Tiefziehverfahren notwendig sind, und zum anderen trotzdem lederähnliche Oberflächeneigenschaften besitzen.

Aufgabe der vorliegenden Erfindung war es daher, einen Verbundwerkstoff zur Verfügung zu stellen, der weitgehend die Eigenschaften der als Grundwerkstoff eingesetzten Naturfasern aufweist, sich andererseits jedoch durch seine thermoplastischen Eigenschaften zur Verarbeitung in modernen Tiefziehverfahren eignet. Weiterhin war es Aufgabe der Endung einen Klebstoff zur Verfügung zu stellen, mit dem sich der thermoplastische Verbundwerkstoff im Rahmen eine maschinellen Verarbeitung fest und dauerhaft mit einer Vielzahl von Oberflächen verbinden läßt.

Es wurde nun gefunden, daß sich ein thermoplastisches Verbundmaterial erhalten läßt, das ein organisches Fasermaterial oder ein Gemisch aus zwei oder mehr organischen Fasermaterialien und ein thermoplastisches Bindemittel als Matrixmaterial enthält, wenn als Matrixmaterial Polyacrylate aus mindestens einer wäßrigen anionischen Polyacrylatdispersion und mindestens einer wäßrigen kationischen Polyacrylatdispersion eingesetzt werden. Das so erhältliche thermoplastische Verbundmaterial weist eine Fließübergangsgrenze von etwa 70 bis etwa 130°C auf, und ist so für eine rationelle Verarbeitung bei der Oberflächenbeschichtung geeignet.

Gegenstand der Erfindung ist daher ein thermoplastisches Verbundmaterial, enthaltend
a) mindestens 15 Gew.-% eines organischen Fasermaterials oder eines Gemischs aus zwei oder mehr organischen Fasermaterialien als Komponente A
   und
b) mindestens 15 Gew.-% eines thermoplastischen Bindemittels als Komponente B,
wobei das Bindemittel mindestens zwei verschiedene Polyacrylate enthält und das thermoplastische Verbundmaterial einen Fließübergangsbereich zwischen 70°C und 130°C aufweist.

Als Komponente A des thermoplastischen Verbundmaterials ist jedes beliebige organische Fasermaterial geeignet, das dem thermoplastischen Verbundmaterial die vom Anwender gewünschten Eigenschaften, beispielsweise ein bestimmtes Aussehen oder einen bestimmten Griff, verleiht. Unter organischem Fasermaterial werden im Sinne der vorliegenden Erfindung sowohl natürlich gewonnene oder natürlich gewinnbare Fasern als auch synthetisch hergestellte Fasern verstanden, solange sie auf einer "organischen Basis" beruhen. Nicht zum organischen Fasermaterial zählen daher beispielsweise Fasern wie Asbest, Glasfasern oder Kohlefasern.

Weiterhin wird im Rahmen des vorhergehenden Textes nicht zwischen Materialien unterschieden, die in der Natur bereits in faserförmigen Zustand vorkommen und solchen, die erst durch einen bestimmten Behandlungsschritt in eine faserige Struktur überführt werden müssen. Desgleichen sind im Sinne der Erfindung unter den natürlichen Materialien sowohl pflanzliche als auch tierische organische Fasermaterialien geeignet.

Üblicherweise werden im Rahmen der vorliegenden Erfindung Kunststoffasern, Pflanzenfasern oder tierische Fasern eingesetzt.

Zu den geeigneten Naturfasern zählen beispielsweise tierische Fasern, wie Wolle, Haare oder Seide. Ebenso einsetzbar sind Pflanzenfasern, beispielsweise Baumwolle, Kapok, Flachs, Hanf, Jute, Kenaf, Ramie, Ginster, Manila, Kokos oder Sisal. Geeignete Kunststoffasern aus natürlichen Polymeren sind Cupro-, Viskose-, Modal-, Acetat-, Triacetat- sowie Proteinfasern oder Alginatfasern oder Gemische aus zwei oder mehr der genannten Fasern.

Geeignete Fasern aus synthetischen Polymeren sind beispielsweise Polyacryl-, Modacryl-, Polyvinylchlorid-, flourhaltige Polymerfasern, Polyethylen-, Polypropylen-, Vinylacetat-, Polyacrylnitril-, Polyamid-, Polyester- oder Polyurethanfasern.

Besonders bevorzugt ist es jedoch als organisches Fasermaterial Lederfasern einzusetzen. Zur Gewinnung dieser Fasern werden Lederabfälle mit einem geeigneten Verfahren zerfasert und zerkleinert, so daß sich die gewonnenen Fasern anschließend im Rahmen des erfindungsgemäßen Verfahrens zur Gewinnung eines thermoplastischen Verbundmaterials mit lederähnlichen Eigenschaften einsetzen lassen.

Die Lederfasern lassen sich grundsätzlich aus jeder Art von Lederabfällen gewinnen. Es kann sich dabei sowohl um chromgegerbte als auch um vegetabil gegerbte Leder handeln. Im Rahmen der Erfindung einsetzbare Lederarten sind beispielsweise Boxleder, wie Rindbox, Kalb- oder Mastbox, Schleifbox, Chevrou-Leder, Velourieder, Samtziegenteder, Sandalenleder, Unterleder, Futterleder, Nappaleder, Velourleder, Handschuhleder, Wildleder, Vachette-Leder, Blankleder, sowie technisches Leder, Putzleder, Hutbandleder oder Transparentleder.

In Abhängigkeit vom gewünschten dekorativen oder mechanischen Effekt wird das organische Fasermaterial auf eine gestreckte Länge von etwa 0,1 bis 15 mm zerkleinert. Insbesondere beim Einsatz von Lederfasem bietet sich eine Länge von etwa 0,5 bis 13 mm, bevorzugt etwa 1 bis etwa 10 mm und besonders bevorzugt etwa 3 bis etwa 8 mm Faserlänge an. Die Faserlänge wird dabei im gestreckten Zustand der Faser gemessen, je nach Ausgangsmaterial und Zerkleinerungsart kann es selbstverständlich vorkommen, daß die Faser ohne äußere Beeinflussung eine unregelmäßig gekrümmte Form einnimmt.

Die Komponente A ist im erfindungsgemäßen thermoplastischen Verbundmaterial in einer Menge von mindestens etwa 15 Gew.-% als Grundwerkstoff enthalten. Mit steigendem Anteil an A nimmt das thermoplastische Verbundmaterial zunehmend die Eigenschaften des organischen Fasermaterials an. Je nach gewünschtem Effekt kann es daher vorteilhaft sein, beispielsweise mindestens 30 Gew.-% der Komponente A im erfindungsgemäßen thermoplastischen Verbundmaterial einzusetzen. Gegebenenfalls kann der Anteil des organischen Fasermaterials jedoch auch größer sein, beispielsweise etwa 35 Gew.-%, 40 Gew.-%, 45 Gew.-% oder sogar mehr als etwa 50 Gew.-%, wobei Anteile von beispielsweise 55 Gew.-% oder sogar 60 Gew.-% und mehr möglich sind. Besonders bevorzugt liegt der Anteil an Fasermaterialien bei etwa 40 bis etwa 60 Gew.-%, ganz besonders bevorzugt bei etwa 45 bis etwa 55 Gew.-%.

Vorzugsweise sind im erfindungsgemäßen thermoplastischen Verbundmaterial als Komponente A Lederfasern enthalten.

Um das thermoplastische Verbundmaterial mit den zur weiteren Verarbeitung erforderlichen thermoplastischen Eigenschaften auszustatten, enthält das thermoplastische Verbundmaterial ein thermoplastisches Bindemittel als Komponente B.

Unter "Bindemittel" werden im Rahmen des vorliegenden Textes polymere Verbindungen verstanden, die als Matrix im Verbundmaterial dienen. Als Bindemittel werden in der Regel polymere Materialien mit einem Mo-lekulargewicht von mehr als etwa 1000 eingesetzt, vorzugsweise liegt das Molekulargewicht jedoch höher.

Das Molekulargewicht (Mₙ) der im Bindemittel vorliegenden Polymeren liegt vorzugsweise zwischen etwa 10.000 und etwa 1.000.000, besonders bevorzugt zwischen etwa 20.000 und etwa 300.000 und insbesondere bevorzugt zwischen etwa 50.000 und etwa 150.000.

Im Rahmen des vorliegenden Textes steht der Begriff "Bindemittel" für die Gesamtheit des polymeren Matrixmaterials, unabhängig davon, aus wievielen polymeren Komponenten es besteht und wieviele verschiedene Zubereitungen, enthaltend die das Bindemittel konstituierenden Polymeren, zu seiner Herstellung benötigt wurden.

Die Molekulargewichtsverteilung der Polymeren, wie sie beispielsweise durch Gelpermeationschromatographie ermittelt werden kann, muß nicht monomodal sein. Gegebenenfalls kann das thermoplastische Bindemittel auch eine bi- oder höhermodale Verteilung aufweisen.

Zur Herstellung des erfindungsgemäßen thermoplastischen Verbundmaterials wird ein Bindemittel eingesetzt, dessen eine Komponente in Form mindestens einer wäßrigen anionischen Dispersion vorliegt. Vorzugsweise enthält die mindestens eine anionische Dispersion mindestens ein Polyacrylat oder ein Copolymeres aus mindestens einem Acrylsäureester oder Methacrylsäureester und wenigstens einer weiteren Verbindung mit einer olefinisch ungesättigten Doppelbindung.

Die Begriffe "Polyacrylat" oder "Polyacrylate", wie sie im Rahmen des vorliegenden Textes benutzt werden, beziehen sich im folgenden sowohl auf Polymere oder Copolymere der Acrylsäure und/oder ihrer Derivate als auch auf Polymere oder Copolymere der Methacrylsäure und/oder ihrer Derivate.

Polyacrylate lassen sich herstellen, indem Acrylsäure und/oder Methacrylsäure und/oder Derivate von Acrylsäure und/oder Methacrylsäure, beispielsweise deren Ester mit mono- oder polyfunktionellen Alkoholen, jeweils alleine oder als Gemisch aus zwei oder mehr davon, auf bekannte Weise, beispielsweise radikalisch oder ionisch, polymerisiert werden. Im Rahmen der vorliegenden Erfindung werden Polyacrylate in anionischer Dispersion, wie sie beispielsweise durch Emulsionspolymerisation der entsprechenden Monomeren und Comonomeren erhältlich sind, bevorzugt. Wäßrige anionische Dispersionen enthalten zum Emulgieren in der Regel beispielsweise die Natrium-, Kalium- und/oder Ammoniumsalze langkettiger, aliphatischer Carbonsäuren und/oder Sulfonsäuren, Ebenso geeignet sind jedoch auch Alkali-C₁₀₋₁₈-alkylsulfate, oxethylierte und sulfatierte und/oder sulfonierte langkettige, aliphatische Alkohole oder Alkylphenole sowie Sulfodicarbonsäureester.

In der Regel werden im Rahmen der vorliegenden Erfindung als Polyacrylate keine Homopolymeren eingesetzt sondern Copolymere, die neben den Acrylsäureestern (Acrylaten) noch Styrol, Acrylnitril, Vinylacetat, Vinylpropionat, Vinylchlorid, Vinylidenchlorid und/oder Butadien aufweisen.

Als Monomere kommen bei der Herstellung der Polyacrylate insbesondere Methacrylat, Ethylacrylat, n-Butylacrylat, Isobutylacrylat, tert.-Butylacrylat, Hexylacrylat, 2-Ethylhexylacrylat oder Laurylacrylat in Frage. Gegebenenfalls können als weitere Monomere noch Acrylsäure, Methacrylsäure, Acrylamid oder Methacrylamid in geringen Mengen bei der Polymerisation zugegeben werden.

Gegebenenfalls können noch weitere Acrylate und/oder Methacrylate mit einer oder mehreren funktionellen Gruppen bei der Polymerisation anwesend sein. Beispielsweise sind dies Maleinsäure, Itaconsäure, Butandioldiacrylat, Hexandioldiacrylat, Triethylenglycoldiacrylat, Tetraethylenglycoldiacrylat, Neopentylglycoldiacrylat, Trimethylolpropantriacrylat, 2-Hydroxyethylacrylat, 2-Hydroxyethylmethacrylat, Hydroxypropylacrylat, Propylenglycolmethacrylat, Butandiolmonoacrylat, Ethyldiglycolacrylat sowie, als sulfonsäuregruppentragendes Monomeres, beispielsweise 2-Acrylamido-2-methylpropansulfonsäure.
Besonders bevorzugt sind Acrylester-Vinylester-Copolymere, Acrylester-Styrol-Copolymere oder Acrylester-Methacrylester-Copolymere. Besonders bevorzugt und zum Einsatz in den erfindungsgemäßen thermoplastischen Verbundmaterialien geeignet sind Polyacrylat-Dispersionen, wie sie unter dem Markennamen Acronal® von der BASF AG, Ludwigshafen, vertrieben werden, insbesondere die Produkte Acronal® 500 D und Acronal® S312 D.

Es ist besonders vorteilhaft, wenn die Matrix der erfindungsgemäßen thermoplastischen Verbundmaterialien mehr als ein aus einer anionischen Dispersion erhältliches Polymeres enthält.

In der Regel weisen anionische Polyacrylatdispersionen lediglich eine Polymersorte auf. Sollen zwei unterschiedliche Polyacrylate aus anionischen Dispersionen verwendet werden, so ist es in der Regel erforderlich zwei verschiedene anionische Dispersionen einzusetzen, die das jeweilige Polymere in dispergierter Form enthalten. Es ist im Rahmen der vorliegenden Erfindung jedoch unerheblich, ob die vorzugsweise in der Matrix enthaltenen verschiedenen Polyacrylate in einer einzigen Dispersion vorliegen, oder ob sie aus zwei oder mehr unterschiedlichen Dispersionen erhalten werden.

Es ist besonders vorteilhaft, wenn die Komponente B mindestens zwei Polyacrylate aus anionischen Dispersionen enthält. Besonders bevorzugt ist es, wenn als anionisch geladene Polymere die in den Dispersionen Acronal® 500 D und Acronal® S312 D enthaltenen Polymeren eingesetzt werden. Insbesondere ist es bevorzugt, wenn Copolymerisate auf der Basis von n-Butylacrylat und Styrol sowie Copolymerisate auf der Basis von Acrylsäureester und Vinylacetat zusammen in der Komponente B der erfindungsgemäßen thermoplastischen Verbundmaterialien vorliegen.

Besonders vorteilhaft ist es, wenn das thermoplastische Bindemittel zu mindestens 50 Gew.-% aus anionischer Dispersion erhältliches Polyacrylat oder eines Gemischs aus zwei oder mehr solcher aus anionischen Dispersionen erhältlichen Polyacrylate enthält.

In einer bevorzugten Ausführungsform enthält das thermoplastische Bindemittel zu mindestens 40 Gew.-% ein Copolymeres aus n-Butylacrylat und Styrol.

Es hat sich weiterhin gezeigt, daß die thermoplastischen Eigenschaften des erfindungsgemäßen thermoplastischen Verbundmaterials durch die Wahl von Polyacrylaten mit einer geeigneten Mindestfilmbildetemperatur beeinflußbar sind. Die Mindestfilmbildetemperatur eines Polymeren ist die tiefste Temperatur bei der eine Dispersion nach Verdampfen des Wassers gerade noch einen zusammenhängenden Film bildet. Sie liegt nahe bei der Glasübergangstemperatur T_{g} des Polymeren und bestimmt mit der Filmbildung eine der wichtigsten anwendungstechnischen Eigenschaften einer Polymerdispersion. Die Mindestfilmbildetemperatur (MFT) wird in der Regel nach DIN 53787 bestimmt. Als Meßgerät dient eine Metallplatte, an die ein Temperaturgradient angelegt wird. Beobachtet wird, bei welcher Temperatur der Film beginnnt rissig zu werden oder wo der sogenannte Weißpunkt liegt, an dem der trübe Film klar zu werden beginnt.

Es ist im Rahmen der vorliegenden Erfindung vorteilhaft, wenn mindestens eines der Polyacrylate aus anionischer Dispersion eine MFT von bis zu 30°C aufweist.

Besonders vorteilhaft ist es, wenn mindestens eines der Polyacrylate aus anionischer Dispersion eine MFT von etwa bis zu 5°C und mindestens ein weiteres Polyacrylat aus anionischer Dispersion eine MFT von etwa 15°C bis etwa 25°C aufweist.

Neben dem mindestens einen Polyacrylat aus anionischer Dispersion weist die Komponente B für das erfindungsgemäße thermoplastische Verbundmaterial noch mindestens ein Polyacrylat aus kationischer Dispersion auf.

Kationische Polyacrylatdispersionen unterscheiden sich von den anionischen durch die Wahl des Emulgators. In der Regel werden hier Ammonium-, Sulfonium- oder Phosphoniumverbindungen eingesetzt, die als hydrophoben Molekülteil mindestens eine aliphatische Kohlenwasserstoffkette aufweisen.

Erfindungsgemäß besonders geeignete kationische Polyacrylatdispersionen sind beispielsweise die Dispersionen von Copolymeren auf der Basis von Styrol und Acrylsäureestern, wie sie unter dem Handelsnamen Acronal® DS 3476 von der Firma BASF AG, Ludwigshafen, vertrieben werden.

Es ist bevorzugt, wenn die kationische Polyacrylatdispersion eine MFT von wenigstens etwa 40°C aufweist. Vorzugsweise liegt die MFT jedoch höher, etwa bei 45°C, 50°C oder 55°C. Besonders bevorzugt sind kationische Polyacrylatdispersionen mit einer MFT von etwa 60°C und darüber, beispielsweise etwa 65°C oder etwa 70°C oder mehr.

Der gesamte Anteil der Komponente B am thermoplastischen Verbundmaterial beträgt vorzugsweise mindestens etwa 15 Gew.-%. Es kann vorteilhaft sein, beispielsweise zur gezielten Eigenschaftsänderung, wenn das thermoplastische Verbundmaterial mindestens etwa 20 Gew.-% oder mindestens etwa 30 Gew.-% der Komponente B enthält.

Gegebenenfalls kann das thermoplastische Bindemittel neben den genannten Polyacrylaten noch weitere Polymere, beispielsweise Polyurethane, Polyester, Polyether, Polyamide, Polyolefine oder Gemische aus zwei oder mehr davon enthalten. In einer bevorzugten Ausführungsform enthält das thermoplastische Bindemittel jedoch zu mindestens 85 Gew.-% Polyacrylate.

Neben dem organischen Fasermaterial als Komponente A und dem thermoplastischen Bindemittel als Komponente B, kann das erfindungsgemäße thermoplastische Verbundmaterial noch weitere Komponenten, vorzugsweise in einem Anteil bis zu etwa 15 Gew.-%, aufweisen. Hierzu zählen beispielsweise anorganische Salze, kationische Polymere, Konservierungsmittel, Farbstoffe, natürliche und/oder synthetische Fette, Paraffine, natürliche und/oder synthetische Öle, Silkonöle sowie ionische und/oder nichtionische Tenside.

Als anorganische Salze werden vorzugsweise Salze des Aluminiums oder des Kupfers eingesetzt, besonders bevorzugt ist hierbei das Aluminiumsulfat.

Die anorganischen Salze werden in der Regel im Rahmen des Herstellungsverfahrens, das im weiteren Verlauf des vorliegenden Textes noch beschrieben wird, zum Ausfällen (zur Koagulation) des polymeren Bindemittels eingesetzt. In der Regel wird der größte Anteil des Metallsalzes mit der wäßrigen Phase aus dem Verbundwerkstoff entfernt, ein geringer Rest kann jedoch im Verbundmaterial verbleiben.

Als kationische Polymere oder kationisch geladene Polymere werden Polymere bezeichnet, die auf dem Polymerrückgrat oder auf am Polymerrückgrat kovalent gebundenen Seitengruppen positive Ladungen tragen.

Kationische Ladungen lassen sich auf ein Polymeres durch Anbringen geeigneter kationischer Gruppen aufbringen. Unter "kationischen Gruppen" werden Gruppen verstanden, die entweder eine positive Ladung tragen oder durch eine einfache Reaktion, beispielsweise eine Quaternisierung, in eine eine kationische Ladung tragende Gruppe überführbar sind. In der Regel handelt es sich hierbei um Amine oder Ammoniumgruppen.

Unter einer "Quaternisierung" wird eine Reaktion verstanden, bei der ein primäres, sekundäres oder tertiäres Amin durch Umsetzung mit einem geeigneten Reagenz in die vierwertige, positiv geladene Form überführt wird. Geeignete Reagenzien sind beispielsweise Alkylhalogenide, insbesondere Alkylchloride, Alkylbromide und Alkyliodide, sowie Protonensäuren, beispielsweise Mineralsäuren, wie Halogenwasserstoffsäure, Phosphorsäure, Schwefelsäure, oder starke organische Säuren, wie Ameisen- oder Essigsäure.

Als kationische Gruppen tragende Polymere können geeignet modifizierte Polyacrylate, Polyester, Polyurethane oder sonstige Polymere eingesetzt werden, die mindestens ein primäres, sekundäres oder tertiäres Stickstoffatom tragen. Bevorzugt werden im Rahmen der vorliegenden Erfindung kationische Gruppen tragende Polyacrylate eingesetzt.

Solche Polyacrylate sind herstellbar, indem beispielsweise die oben beschriebenen Monomeren (mit Ausnahme der freie Säuregruppen tragenden Monomere) zusammen mit einem geeigneten, eine primäre, sekundäre oder tertiäre Aminogruppe tragenden ethylenisch ungesättigten Verbindungen copolymerisiert werden. Als ethylenisch ungesättigte, primäre, sekundäre oder tertiäre Aminogruppen tragende Monomere eignen sich beispielsweise Dimethylaminoethylmethacrylat, Dimethylaminoneopentylacrylat, Dimethylaminopropylmethacrylat, Aminoethylmethacrylat, 2-N-Morpholinoethylacrylat, tert.-Butylaminoethylmethylacrylat, 4-Methacrylamido-2,2,6,6-tetramethylpiperidin, Trimethylammoniummethyl-(meth)acrylatchlorid, ä-Acetamido-diethyl-aminoethyl(meth)-acrylatchlorid, Trimethylammoniumpropylacrylatchlorid bzw. -methacrylatchlorid, Trimethylammoniummethylacrylatbromid bzw. -methacrylatbromid, Trimethylammoniumneopentylmethacrylatchlorid bzw. -acrylatchlorid, Diallyldimethylammoniumchlorid, Diallyl-butyl-methyl-ammoniumbromid. Die kationische geladenen Polymere weisen vorzugsweise einen pH-Wert von etwa 3 bis etwa 8 auf, besonders bevorzugt ist der pH-Wert der kationisch geladenen Polymere jedoch neutral, d.h. zwischen etwa 6,5 und etwa 7,5.

Die Ladungsdichte, d.h. die Zahl der kationischen Gruppen pro Gewichtseinheit am Polymeren beträgt bevorzugt etwa 2 bis etwa 6 meq/g, besonders bevorzugt etwa 2,5 bis etwa 5 meq/g und weiter bevorzugt etwa 3,5 bis etwa 4,5 meq/g.

Das kationische Polymere weist in der Regel ein Molekulargewicht von etwa 1.000 bis etwa 500.000 auf, wobei Molekulargewichte von etwa 50.000 bis etwa 150.000, insbesondere von etwa 80.000 bis etwa 120.000, bevorzugt sind.

Unter den Konservierungsmitteln sind besonders solche Konservierungsmittel bevorzugt, die ein fungizides Wirkspektrum aufweisen. Gut geeignet im Sinne der Erfindung ist das von der Firma BAYER, Leverkusen, vertriebene Konservierungsmittel Preventol® A11D.

In einer besonders bevorzugten Ausführungsform enthält die Komponente B
- etwa 10 bis etwa 60 Gew.-%, bevorzugt mindestens etwa 40 Gew.-%, mindestens eines Copolyacrylats aus n-Butylacrylat und Styrol,
- etwa 12 bis etwa 60 Gew.-% mindestens eines weiteren Copolyacrylats aus einem Acrylsäureester und Vinylacetat,
- gegebenenfalls bis zu 30 Gew.-% eines weiteren Polyacrylats oder Copolyacrylats aus einem Acrylsäureester und Styrol, wobei der Acrylsäureester nicht n-Butylacrylat ist und
- gegebenenfalls bis zu 15 Gew.-% anorganische Salze, Konservierungsmittel, Farbstoffe, natürliche und/oder synthetische Fette, Paraffine, natürliche und/oder synthetische Öle, Silkonöle, ionische und/oder nichtionische Tenside.

Das erfindungsgemäße thermoplastische Verbundmaterial soll vorzugsweise zur Beschichtung von Oberflächen mit einer Reliefstruktur dienen. Solche Beschichtungen werden üblicherweise im sogenannten Tiefziehverfahren aufgebracht. Dazu ist es erforderlich, daß das thermoplastische Verbundmaterial einen Fließübergangsbereich von etwa 70 bis 130°C aufweist.

Bei Temperaturen oberhalb des angegebenen Fließübergangsbereichs lassen sich die erfindungsgemäßen thermoplastischen Verbundmaterialien irreversiblen Formänderungen, beispielsweise Dehnungen, unterziehen.

Gegenstand der Erfindung ist auch ein Verfahren zur Herstellung eines thermoplastischen Verbundmaterials, enthaltend
a) mindestens 15 Gew.-% eines organischen Fasermaterials oder eines Gemischs aus zwei oder mehr organischen Fasermaterialien als Komponente A
   und
b) mindestens 15 Gew.-% eines thermoplastischen Bindemittels als Komponente B,
wobei die Komponente A, aus Fasern mit einer gestreckten Faserlänge von 0,1 bis 15 mm, gleichzeitig oder in beliebiger Reihenfolge aufeinanderfolgend mit mindestens einer anionischen Polymerdispersion und mindestens eine kationischen Polymerdispersion, die zusammen die Komponente B bilden, versetzt, und anschließend mit einer wäßrigen Lösung eines Aluminium- oder eines Kupfersalzes behandelt, entwässert und getrocknet wird.

Die folgende, beispielhafte Verfahrensbeschreibung dient lediglich der Illustration einer Möglichkeit zur Durchführung des erfindungsgemäßen Verfahrens, und stellt keine Beschränkung dar. Abweichungen vom folgenden Verfahrensablauf, gegebenenfalls unter Optimierung des folgend beschriebenen Verfahrens, kann der Fachmann in Abhängigkeit von der ihm vorliegenden Situation problemlos vornehmen.

Zur Herstellung der erfindungsgemäßen thermoplastischen Verbundmaterialien werden gegerbte Lederabfälle in Messermühlen auf eine Größe von etwa 1 cm² Fläche zerkleinert (vorgeschnitten). Die Zerkleinerung erfolgt in diesem Stadium in der Regel trocken.

Die so vorzerkleinerten Lederabfälle werden abgewogen und über sogenannte Scheibenrefiner naß zerfasert. Die Wasserzugabe wird so gesteuert, daß man einen knotenfreien Faserbrei erhält, der aus etwa 5 Gew.-% Fasern und etwa 95 Gew.-% Wasser besteht (entsprechend ca. 1000 kg Fasern auf 20 m³ Wasser). Vorzugsweise wird die Zerkleinerung so durchgeführt, daß ein Teil des später im Prozess stehenden Abwassers an dieser Stelle in den Kreislauf zurückgeführt wird. So lassen sich Abwasseranteile am gesamten, während des Zerkleinerungsvorgangs eingesetzten Wasser von etwa 50 %, vorzugsweise darüber, erzielen.

Die so erhältliche Suspension von Lederfasern in Wasser wird anschließend in ein geeignetes Gefäß, vorzugsweise eine Ansetzbütte, transferiert. Die transferierte Menge wird so bemessen, daß die Konzentration an Lederfasern bezogen auf die gesamte vorgesehene Ansatzmenge zwischen etwa 1,5 und etwa 2,5 Gew.-% liegt.

Wenn die Lederfasern einen Anteil an chromgegerbtem Leder enthalten oder wenn die Lederfasern ausschließlich aus chromgegerbtem Leder bestehen werden zunächst vegetabile Gerbstoffe, beispielsweise Kastanienholzextrakt, Quebracho, Mimosa oder Valonea, zugegeben.

Anschließend werden Fettungsmittel zugegeben. Als Fettungsmittel sind alle Lederfettungsmittel geeignet, die in Wasser emulgierbar sind. Vorzugsweise werden hierzu sulfatierte Fischöle eingesetzt, beispielsweise Licrol® DM 10 der Firma Eberle, Coriatol U6 von der Firma Polychemie oder Coripol 2397 von der Firma TFL.

Weiterhin können dem Ansatz Farbstoffe zugegeben werden. Überlicherweise handelt es sich hierbei um quantitativ aufziehende Eisenoxidfarben, beispielsweise Bayferrox® 960 (Firma BAYER).

Der Ansatz kann weiterhin mit Konservierungsmitteln, beispielsweise Präventol A11D (Firma BAYER), natürlichen und/oder synthetischen Fetten, natürlichen und/oder synthetischen Ölen, Silikonölen und/oder ionischen und/oder nichtionischen Tensiden versetzt werden.

Sofern die Zusatzstoffe nicht wasserlöslich oder in Wasser selbstemulgierbar sind, werden sie in der Regel in Form von Emulsionen dem Ansatz zugesetzt.

Im Anschluß daran werden die verschiedenen (anionischen und kationischen) Bindemitteldispersionen zugegeben.

Die Bindemitteldispersionen können entweder gleichzeitig oder in beliebiger Reihenfolge nacheinander dem Ansatz zugegeben werden. Vorzugsweise erfolgt die Zugabe der mindestens einen anionischen Polymerdispersion und die Zugabe der mindestens einen kationischen Polymerdispersion in beliebiger Reihenfolge nacheinander.

Vorteilhafterweise wird die anionisch stabilisierte Bindemitteldispersion oder werden die anionisch stabilisierten Bindemitteldispersionen getrennt von der kationisch stabilisierten Bindemitteldispersion oder den kationisch stabilisierten Bindemitteldispersionen zugegeben. Die Reihenfolge spielt hierbei keine Rolle. So kann beispielsweise zunächst die anionisch stabilisierte Bindemitteldispersion oder die anionisch stabilisierten Bindemitteldispersionen zugegeben werden und im Anschluß daran die kationisch stabilisierte Bindemitteldispersion oder die kationisch stabilisierten Bindemitteldispersionen. Es ist ebenfalls möglich, insofern mehrere anionisch stabilisierte Bindemitteldispersionen und eine oder mehrere kationisch stabilisierte Bindemitteldispersionen bei der Herstellung des erfindungsgemäßen thermoplastischen Verbundmaterials verwendet werden, die anionisch stabilisierten Bindemitteldispersionen und kationisch stabilisierte Bindemitteldispersion oder die kationisch stabilisierten Bindemitteldispersionen alternierend zuzugeben.

Nach beendeter Zugabe der Bindemitteldispersionen wird der Ansatz mit einer Lösung eines Aluminium- oder eines Kupfersalzes versetzt. Vorzugsweise wird Aluminiumsulfat eingesetzt, wobei pro 1000 kg Ansatz etwa 90 bis 150 I, vorzugsweise etwa 100 bis 130 I, besonders bevorzugt etwa 120 I einer etwa 20 bis vorzugsweise etwa 50 Gew.-%igen Aluminiumsulfatlösung zugegeben werden.

Gleichzeitig mit der Metallsalzbehandlung, vorzugsweise jedoch im Anschluß an diese, wird der Ansatz mit einer Lösung eines kationisch geladenen Polymeren behandelt. Das kationisch geladene Polymere hat vorzugsweise ein Molekulargewicht, das etwa 150.000 nicht übersteigt, vorteilhafterweise von etwa 80.000 bis etwa 120.000 beträgt.

Die Ladungsdichte des kationisch geladenen Polymeren beträgt etwa 2,00 bis 5,00 meq/g, vorzugsweise etwa 2,50 bis etwa 4,50 meq/g und besonders bevorzugt etwa 3,00 bis etwa 4,00 meq/g.

Die Menge des kationisch geladenen Polymeren beträgt etwa 0,1 bis 10 Gew.-%, bezogen auf die Gesamttrockenmasse im Ansatz, vorzugsweise etwa 1 bis 8 Gew.-% und besonders bevorzugt etwa 2 bis 6 Gew.-%.

In einer bevorzugten Ausführungsform werden etwa 3,5 bis etwa 4,5 Gew.-% des kationisch geladenen Polymeren, bezogen auf die Gesamttrockenmasse im Ansatz, zugegeben.

Nach etwa einer Stunde Rühren wird der Ansatz unter Zuhilfenahme einer geeigneten Entwässerungsvorrichtung von überschüssigem Wasser befreit. Hierzu bieten sich zum einen Entwässerungseinrichtungen an, die im sogenannten Batch-Verfahren arbeiten, beispielsweise eine sogenannten Müllerpresse, bevorzugt ist jedoch eine kontinuierliche Verarbeitung auf einer Langsiebentwässerungsmaschine. Der Ansatz wird auf der Langsiebentwässerungsmaschine auf einen Restwassergehalt von etwa 70 Gew.-% entwässert.

Im Anschluß an den Entwässerungsvorgang wird das erhaltene Material unter Zuhilfenahme einer geeigneten Preßvorrichtung, vorzugsweise einer Taktpresse, mit einem Druck von etwa 1000 bis etwa 3000 t, vorzugsweise etwa 1500 bis etwa 2500 t, gepreßt.

Das so behandelte Material wird nun durch eine geeignete thermische Trocknungseinrichtung geführt, und hier bis auf einen Restwassergehalt von etwa 10 Gew.-% getrocknet und anschließend auf Rollen aufgewickelt.

Die so gewonnenen Folien zeigen einen Fließübergangsbereich von etwa 70 bis etwa 130°C und sind damit für moderne Oberflächenbeschichtungsverfahren, vorzugsweise sogenannte Tiefziehverfahren, geeignet.

Um eine dauerhafte Befestigung zwischen Oberflächenbeschichtungsmaterial und zu beschichtender Oberfläche zu erreichen, wird in der Regel ein Klebstoff eingesetzt. Unter Klebstoffen werden im Sinne der vorliegenden Erfindung nichtmetallische, vorzugsweise organische Stoffe verstanden, die Fügeteile durch Flächenhaftung und innere Festigkeit verbinden.

Zu den Klebstoffen zählen beispielsweise Leime, Dispersionsklebstoffe, lösemittelhaltige Klebstoffe und/oder Kontaktklebstoffe.

Vorzugsweise werden im Rahmen der vorliegenden Erfindung organische Klebstoffe eingesetzt, wobei es sich entweder um physikalisch abbindende Klebstoffe oder um chemisch reagierende Klebstoffe oder eine Kombination aus beidem handeln kann. Zu den physikalisch abbindenden Klebstoffen, die im Sinne der vorliegenden Erfindung eingesetzt werden können, zählen beispielsweise in Lösung oder Dispersion vorliegende Klebstoffe, Kontaktklebstoffe oder Schmelzklebstoffe. Als chemisch reagierende Klebstoffe können z.B. solche eingesetzt werden, die ohne Abspaltung flüchtiger Bestandteile eine ausreichende Haftung der zu verklebenden Flächen aneinander vermitteln. Es können jedoch auch Klebstoffe eingesetzt werden, die unter Abspaltung flüchtiger Bestandteile die erforderliche Haftung erzielen. Die Klebstoffe können sowohl kalthärtend als auch warmhärtend sein, einen thermoplastischen, duromeren oder elastomeren Endzustand aufweisen und einkomponentig oder zwei- oder mehrkomponentig anwendbar sein.

In der Regel ist es vorteilhaft, wenn die zu verklebenden Flächen im Anschluß an das Aneinanderfügen einem erhöhten Druck ausgesetzt werden. In einer besonderen Ausführungsform werden daher im Rahmen der vorliegenden Erfindung Klebstoffe eingesetzt, die nach Ausüben von Druck auf die aneinanderzufügenden Flächen eine im Vergleich zur drucklosen Verarbeitung verbesserte Haftung ergeben.

Die im Rahmen der vorliegenden Erfindung eingesetzten Klebstoffe weisen vorteilhafterweise wenigstens drei unterschiedliche makromolekulare Verbindungen als Haftvermittler auf.

Unter Haftvermittler werden im Rahmen der vorliegenden Erfindung makromolekulare Stoffe verstanden, die hauptsächlich zum Entstehen der Adhäsions- und Kohäsionskräfte zwischen den zu verklebenden Flächen beitragen.

Im Rahmen der vorliegenden Erfindung wird als Haftvermittler vorzugsweise eine Kombination aus Polyurethan, Polyacrylat und Ethylenvinylacetatcopolymer (EVA-Copolymer), besonders bevorzugt in Form wäßriger Dispersionen eingesetzt. Eine solche Vorgehensweise hat den Vorteil, daß sich die einzelnen Komponenten leicht zur endgültigen Rezeptur mischen lassen.

Im einzelnen enthält der erfindungsgemäße Klebstoff etwa 30 bis 120 Gewichtsteile einer vorzugsweise anionischen Polyesterpolyurethandispersion.

Polyesterpolyurethane sind erhältlich, indem in der Regel relativ niedermolekulare Polyester mit OH-Endgruppen mit wenigstens zweiwertigen Isocyanaten unter Ausbildung von Urethanverknüpfungen umgesetzt werden. Die Polyester weisen dabei in der Regel ein Molekulargewicht von wenigstens etwa 400, vorzugsweise wenigstens etwa 500 auf. Es können sowohl aromatische als auch aliphatische Polyester eingesetzt werden, wobei aromatische Polyester üblicherweise als alleinige Polyesterkomponente aufgrund der hohen Kristallisationsneigung und der geringen Flexibilität nicht geeignet sind.

In der Regel als Säurekomponenten am Aufbau des Polyesters beteiligt sind beispielsweise aliphatische Dicarbonsäuren, wie Butan-1,4-dicarbonsäure, Pentan-1,5-dicarbonsäure, Hexan-1,6-dicarbonsäure, Heptan-1,7-dicarbonsäure und weitere, höhere Homologen mit zunehmender Zahl von Kohlenstoffatomen, Weiterhin sind beispielsweise aromatische Dicarbonsäuren, beispielsweise Terephthalsäure oder Isophthalsäure, einsetzbar.

Als Diolkomponente zur Herstellung der Polyester lassen sich in der Regel alle aliphatischen Dialkohole mit 2 bis etwa 20 Kohlenstoffatomen einsetzen. Bevorzugt sind hierbei Ethylenglycol, Propylenglycol, Butylenglycol, Pen-tandiol-1,5, Hexandiol-1,6, Heptandiol-1,7, Octandiol-1,8, Nonandiol-1,9, Decandiol-1,10 sowie die höheren Homologen mit bis zu 20 Kohlenstoffatomen. Bevorzugt sind hierbei die aliphatischen Diole mit 2 bis 10 Kohlenstoffatomen, vorzugsweise etwa 4 bis 8 Kohlenstoffatomen.

Gegebenenfalls können die Polyester auch unter Verwendung von Säure- oder Alkoholkomponenten hergestellt worden sein, die eine von 2 abweichende Funktionalität aufweisen. Als 3- oder höherwertige Säurekomponenten sind beispielsweise 1,2,3-Propantricarbonsäure, Hemimellithsäure, Trimellithsäure, Trimesinsäure oder 1,2,4,5-Benzoltetracarbonsäure einsetzbar. 3- oder höherwertige Alkoholkomponenten sind beispielsweise Glycerin, Trimethylolpropan, Pentaerythrit oder Kohlehydrate, wie beispielsweise die monomeren Zuckerverbindungen, insbesondere Glucose.

Gegebenenfalls können als Diolkomponente auch die Umsetzungsprodukte von zwei oder höherwertigen Alkoholen mit Ethylenoxid und/oder Propylenoxid eingesetzt werden.

Grundsätzlich ist es auch möglich, Gemische aus mehreren unterschiedlichen Säuren und mehreren unterschiedlichen Alkoholen miteinander umzusetzen.

Die Umsetzung verläuft in der Regel mit einer Stöchiometrie, die es erlaubt, zum einen das gewünschte Molekulargewicht einzustellen (in der Regel etwa 400 bis etwa 10.000, vorzugsweise etwa 500 bis etwa 5.000) und gleichzeitig gewährleistet, daß der Polyester wenigstens eine Hydroxygruppe im Molekül, vorzugsweise als Endgruppe, aufweist.

Die beschriebenen Polyester werden im Anschluß mit di- oder höherwertigen, beispielsweise Tri- oder Tetraisocyanaten, umsetzt. Zu diesem Zweck können prinzipiell alle aliphatischen oder aromatischen Polyisocyanate eingesetzt werden. Bevorzugte Polyisocyanate sind beispielsweise Hexamethylendi-isocyanat-1,6, 2,4-und 2,6-Toluylendiisocyanat, und 4,4'-Diisocyanatodiphenylmethan (MDI). Wird Toluylendiisocyanat eingesetzt, so handelt es sich vorzugsweise um ein Isomerengemisch, welches das 2,4- und das 2,6-lsomere in einem Verhältnis von etwa 80 zu etwa 20 aufweist.

Die Polyurethane liegen vorzugsweise in dispergierter Form vor, wobei Wasser als kontinuierliche Phase bevorzugt ist. In der Regel werden anionische Emulgatoren eingesetzt.

Es ist besonders bevorzugt, wenn die Polyurethandispersionen einen Feststoffgehalt von etwa 35 bis etwa 65 % aufweisen, eine Viskosität (nach DIN 53019) von weniger als etwa 1000 mPas, vorzugsweise etwa 100 bis etwa 900 mPas und besonders bevorzugt etwa 200 bis etwa 800 mPas aufweisen. Der pH-Wert liegt bevorzugt in einem Bereich von etwa 5 bis etwa 9, besonders bevorzugt bei etwa 6,5 bis etwa 7,5. Die Mindestfilmbildetemperatur (DIN 53787) der bevorzugten Polyurethandispersionen liegt zwischen etwa 2 und etwa 10°C, vorzugsweise bei etwa 4 bis etwa 6°C und besonders bevorzugt bei etwa 5°C. Der Erweichungspunkt der aus diesen Polyurethandispersionen erhältlichen Filme kann nach ASTM D 816 mehr als 100°C betragen, bevorzugt ist es jedoch wenn der Erweichungspunkt etwa 80°C oder darunter beträgt, beispielsweise etwa 60°C.

Beispiele für im Handel erhältliche, im Rahmen der Erfindung einsetzbare Polyurethandispersionen sind Dispercoll® U 42, Dispercoll® U 53, Dispercoll® U 54, Dispercoll® KA 8481 der Fa. BAYER, Quilastic® DEP-172 und/oder Quilastic® 144-66. Besonders bevorzugt ist Dispercoll® U 53.

Die Polyacrylsäureester werden ebenfalls vorzugsweise als wäßrige Dispersion eingesetzt. Es ist besonders bevorzugt, wenn die Dispersion auf der Basis von anionischen Emulgatoren aufgebaut ist. Vorzugsweise handelt es sich bei den Polyacrylatdispersionen um Polymerdispersionen, die an sich schon als Klebstoffe, sogenannte Acrylat-Klebstoffe, eingesetzt werden können. Vorzugsweise basieren Polyacrylate auf Acrylsäureestern, vorzugsweise Methyl-, Ethyl-, n-Butyl-, iso-Butyloder 2-Ethylhexylestern der Acrylsäure. Es ist ebenfalls möglich, zusammen mit oder anstelle der Acrylsäureester die entsprechenden Ester der Methacrylsäure einzusetzen. Die Acrylsäureester und/oder Methacrylsäureester können mit weiteren Substanzen, die eine olefinisch ungesättigte Doppelbindung aufweisen, copolymerisiert sein. Bevorzugt sind dies beispielsweise Vinylester von Carbonsäuren, beispielsweise Vinylacetat, oder Styrol.

Gegebenenfalls können die Polyacrylate funktionelle Gruppen aufweisen, die eine nachträgliche Vernetzung, beispielsweise durch Temperaturerhöhung, erlauben. Vorzugsweise handelt es sich hierbei um funktionelle Gruppen, die durch Zugabe einer geringen Menge einer katalytisch wirksamen Substanz durch Temperaturerhöhung vernetzbar sind. Besonders bevorzugt ist es, wenn als Katalysator eine Säure eingesetzt wird oder eine andere Verbindung, die durch Temperaturerhöhung in geeigneter Umgebung, beispielsweise wäßriger Umgebung, eine Säure freisetzen kann. Bevorzugt sind hierbei Verbindungen wie Oxalsäure, Ammoniumchlorid, Magnesiumchlorid und/oder Diammoniumphosphat.

Die Polyacrylatdispersionen weisen vorzugsweise bei 23°C eine Viskosität (DIN 53019) von etwa 20 bis etwa 5.000 mPas auf. Der pH-Wert der bevorzugten Dispersionen beträgt in der Regel etwa 2 bis etwa 9, bevorzugt etwa 2,5 bis etwa 8. Die Mindestfilmbildetemperatur (DIN 53787) liegt bei allen eingesetzten Polyacrylatdispersionen unterhalb von etwa 1°C, bevorzugt unterhalb von etwa 0°C. Die Polyacrylate weisen in der Regel eine Glasübergangstemperatur von weniger als etwa -20°C, vorzugsweise weniger als -30°C und besonders bevorzugt weniger als -35°C, beispielsweise -40°C oder -45°C, auf. Die mittlere Teilchengröße der dispergierten Polyacrylatpartikel liegt vorzugsweise bei weniger als etwa 70 im, bevorzugt weniger als etwa 65 im.

Bevorzugt eingesetzte Handelsprodukte sind beispielsweise unter dem Namen Acronal® V 205 von der Fa. BASF oder unter dem Namen Quiacryl® 126-07 von der Fa. Merquinsa oder unter dem Namen Plextol® E 220 von der Fa. Röhm erhältlich.

EVA-Copolymere sind Copolymere aus Ethylen und Vinylacetat. Die beiden Monomere lassen sich radikalisch initiiert in beliebigen Mengenverhältnissen copolymerisieren. Dabei resultieren Copolymere mit statistischer Anordnung der Monomerbausteine in den Polymerketten. Die Eigenschaften der EVA-Copolymere lassen sich über das Molverhältnis von Ethylen zu Vinylacetat in weiten Grenzen variieren. So sind beispielsweise Produkte mit einem Ethylengehalt von weniger als 30 Gew.-% teilkristallin und thermoplastisch, solche mit einem Vinylacetat von etwa 40 bis etwa 70 Gew.-% sind weitgehend amorph. Die Herstellung der EVA-Copolymere erfolgt in der Regel durch Masse-, Emulsions- oder Lösungspolymerisation. Das Molekulargewicht der im Rahmen der Erfindung eingesetzten EVA-Copolymere liegt zwischen etwa 10.000 und etwa 1.500.000. Vorzugsweise liegen die EVA-Copolymere als wäßrige Dispersion mit einem Festkörpergehalt zwischen etwa 40 und etwa 70 Gew.-%, vorzugsweise etwa 50 bis etwa 60 Gew.-% vor. Die Viskosität (nach ISO 2555 bei 23°C, Brookfield (RVT), 20 U/min, Spindel 4) beträgt etwa 2.000 bis etwa 13.000 mPas, beispielsweise können Dispersionen mit einer Viskosität von etwa 4.000 bis etwa 6.000 mPas, etwa 6.000 bis etwa 12.000 mPas oder etwa 2.500 bis etwa 4.000 mPas eingesetzt werden.

Der pH-Wert der Dispersionen liegt zwischen etwa 3 und etwa 6, vorzugsweise zwischen etwa 3,8 und etwa 4,8. Die Dispersionen ergeben opake, transparente oder klare Filme und weisen in der Regel eine Mindestfilmbildetemperatur von weniger als 5°C, vorzugsweise weniger als etwa 3°C und besonders bevorzugt etwa 0°C auf. Die Filme weisen eine Reißfestigkeit (Normklima 23°C/50% RLF, nach DIN 50014) von zwischen etwa 2,5 und etwa 9 N/mm² auf. Beispielsweise sind Dispersionen einsetzbar, die Filme mit einer Reißfestigkeit von etwa 3 N/mm², 6 N/mm² oder etwa 8 N/mm² ergeben. Die Reißdehnung (bestimmt nach DIN 50014 bei Normklima 23°C/50% RLF) sollte für die aus den Dispersionen hergestellten Filme etwa 500 bis etwa 900 % betragen. Die Filme sollten eine Kältebruchtemperatur (DIN 53372) von höchstens etwa 4°C aufweisen.

Der erfindungsgemäße Klebstoff kann noch weitere Komponenten, beispielsweise Netzmittel, Verdickungsmittel, Konservierungsmittel oder Entschäumer enthalten.

Netzmittel werden zur Verbesserung der Untergrundbenetzung in wäßrigen System eingesetzt, im vorliegenden Fall wird durch Netzmittel die Benetzung des thermoplastischen Verbundmaterials und der damit zu verklebenden Oberfläche verbessert. Als Netzmittel sind grundsätzlich alle Tenside einsetzbar, welche die Stabilität der Klebstoffdispersion nicht negativ beeinflussen, vorzugsweise werden jedoch polyethermodifizierte Dimethylpolysiloxane als Netzmittel eingesetzt. Besonders geeignet ist das im Handel erhältliche Produkt BYK®-346, von der Fa. BYK-Chemie GmbH oder Lumiten® IRA.

Als Verdickungsmittel werden organische, hochmolekulare Stoffe eingesetzt, die Wasser aufsaugen und dabei aufquellen und schließlich in zähflüssige Lösungen übergehen. Als Verdickungsmittel einsetzbar sind beispielsweise natürliche Verdickungsmittel, wie Agar-Agar, Carragen, Tragant, Gummiarabicum, Alginate, Pectine, Polyosen, Guar-Mehl, Johannisbrotbaumkernmehl, Stärke, Dextrine, Gelatine oder Casein. Weiterhin einsetzbar sind abgewandelte Naturstoffe wie beispielsweise Carboxymethylcellulose und andere Celluloseether, Hydroxyethylund -propylcellulose sowie Kernmehlether.

Ebenfalls einsetzbar und im Rahmen der vorliegenden Erfindung bevorzugt sind organische, synthetische Verdickungsmittel wie Polycarbonsäuren, Polyether, Polyimine, Polyamide und einige Vinylpolymere, wobei Verdickungsmittel wie Polyvinylalkohol oder Polycarbonsäuren, beispielsweise carboxylgruppenhaltige Acrylestercopolymere, oder Vinylpyrrolidoncopolymere, bevorzugt sind. Die Verdickungsmittel werden als wäßrige Lösung oder wäßrige Dispersion mit einem Feststoffgehalt von in der Regel etwa 20 bis etwa 40 Gew.-%, vorzugsweise etwa 25 bis etwa 30 Gew.-% eingesetzt. Handelsübliche Verdickungsmittel, die im Rahmen der Erfindung einsetzbar sind, sind beispielsweise Collacral®VL von der Fa. BASF oder Latekoll®D von der Fa. BASF.

Als Entschäumer ist beispielsweise Agitan®281 (Münzing Chemie) einsetzbar.

Als Konservierungsmittel ist beispielsweise Aktizid®RS (Thorchemie) geeignet.

Gegenstand der Erfindung ist damit ein Klebstoff, mindestens enthaltend
- etwa 40 bis 100 Gewichtsteile mindestens einer wäßrigen Polyesterpolyurethandispersion,
- etwa 20 bis 40 Gewichtsteile mindestens einer wäßrigen Polyacrylsäure-esterdispersion,
- etwa 15 bis etwa 30 Gewichtsteile mindestens einer wäßrigen Dispersion eines EVA-Copolymeren,
- gegebenenfalls bis zu etwa 0,5 Gew.-% Netzmittel,
- gegebenenfalls bis zu etwa 0,5 Gew.-% Entschäumer,
- gegebenenfalls bis zu etwa 0,5 Gew.-% Konservierungsmittel und
- etwa 0,5 bis etwa 2 Gew.-% Verdickungsmittel.

In einer besonders bevorzugten Ausführungsform enthält der Klebstoff
- etwa 60 Gew.-% einer wäßrigen Polyesterpolyurethan Dispersion
- etwa 20 Gew.-% einer wäßrigen Polyacrylsäureesterdispersion
- etwa 17 Gew.-% einer wäßrigen Dispersion eines EVA-Copolymeren
- etwa 0,5 Gew.-% Netzmittel
- etwa 0,2 Gew.-% Entschäumer
- etwa 0,3 Gew.-% Konservierungsmittel
- etwa 2 Gew.-% Verdickungsmittel.

Der Klebstoff wird auf die mit dem thermoplastischen Verbundmaterial zu beschichtende Unterlage, vorzugsweise eine Preßspanplatte, mittels einer Sprühpistole oder einem anderen geeigneten Hilfsmittel aufgetragen. Zur Erhöhung der Temperatur- und Feuchtigkeitsbeständigkeit können dem Klebstoff unmittelbar vor der Verarbeitung aliphatische oder aromatische Isocyanate, beispielsweise die oben Genannten, in einer Größenordnung von etwa bis zu etwa 5 Gew.-% untergerührt werden.

Nach einer Trocknungszeit von nicht unter 30 Minuten werden die LEFA-Abschnitte auf die zu beschichtende Unterlage aufgelegt und bei einer Temperatur von etwa 80 bis etwa 100°C gepreßt. Die Preßzeit beträgt zwischen etwa 10 und etwa 240, vorzugsweise zwischen etwa 30 und etwa 120 Sekunden, je nach Dicke des LEFA-Abschnitts. Der Preßdruck liegt bei etwa 2 bis etwa 10, vorzugsweise bei etwa 3 bis etwa 6 bar.

Gegenstand der Erfindung ist damit auch die Verwendung eines Klebstoffs mit der oben genannten Zusammensetzung bei der Beschichtung von Gegenständen, vorzugsweise bei der Beschichtung von Möbeln, Möbelteilen, Wand- und/oder Deckenpaneelen. Die so ausgerüsteten Möbelteile weisen neben der dekorativen Funktion beispielsweise eine hervorragende schallschluckende und schalireflexionsmindernde Wirkung auf.

Weiterhin ist Gegenstand der Erfindung die Verwendung eines erfindungsgemäßen thermoplastischen Verbundmaterials oder eines erfindungsgemäß hergestellten thermoplastischen Verbundmaterials zur Oberflächenbeschichtung von Gegenständen. Vorzugsweise handelt es sich bei den Gegenständen um Einrichtungsgegenstände, wobei die Gegenstände besonders bevorzugt Möbel sind.

Ebenfalls Gegenstand der Erfindung sind Gegenstände, beschichtet mit einem erfindungsgemäßen thermoplastischen Verbundmaterial oder mit einem Verbundmaterial hergestellt nach einem erfindungsgemäßen Verfahren. Vorzugsweise handelt es sich bei den Gegenständen um Einrichtungsgegenstände, wobei die Gegenstände besonders bevorzugt Möbel sind.

Ein weiterer Gegenstand der Erfindung ist ein Verfahren zur Oberflächenbeschichtung eines Gegenstands, indem der Gegenstand und ein thermoplastisches Material auf eine Temperatur oberhalb der Fließübergangsgrenze des thermoplastischen Materials erhitzt werden, das thermoplastische Material auf den Gegenstand aufgebracht wird, und der Gegenstand und das thermoplastisches Material anschließend auf eine Temperatur unterhalb der Fließübergangsgrenze des thermoplastischen Materials abgekühlt werden, dadurch gekennzeichnet, daß als thermoplastisches Material ein thermoplastisches Verbundmaterial gemäß der vorliegenden Erfindung oder ein thermoplastisches Verbundmaterial, hergestellt gemäß der vorliegenden Erfindung, eingesetzt wird.

Vorzugsweise wird das thermoplastische Verbundmaterial im Tiefziehverfahren unter Anlegen eines Vakuums aufgebracht. Das thermoplastische Verbundmaterial liegt dabei vorzugsweise in Form von Folien einer Stärke von etwa 0,5 mm bis etwa 1,0 mm, vorzugsweise etwa 0,6 mm bis etwa 0,8 mm, vor.

Ebenfalls Gegenstand der Erfindung sind Gegenstände der oben genannten Art, die unter Verwendung eines Klebstoffs mit der oben genannten Zusammensetzung beschichtet wurden, vorzugsweise mit einer Folie beschichtet wurden und besonders bevorzugt mit einer LEFA-Folie beschichtet wurden.

Die Erfindung wird nachfolgend durch Beispiele näher erläutert, ohne jedoch auf diese Beispiele beschränkt zu sein.

### Beispiele:

Ein erfindungsgemäßes thermoplastisches Verbundmaterial wurde wie folgt hergestellt:

800 Gewichtsteile nasse Chromfalzspäne wurden mit 5 Gewichtsteilen Fakonoxgelb 12376 und Fakonoxgelb 12365 (Firma Carboscholz) und mit 10.000 Gewichtsteilen Wasser versetzt.

Anschließend wurden 7 Gewichtsteile 50 %ige Natronlauge, 5 kg Licrol® DM 10 (90 Gew.-% Aktivsubstanz) und 5 kg Tecol® SP (Firma Trübchemie, 60 Gew.-% Aktivsubstanz) dem Ansatz zugegeben. Darauffolgend wurden 250 Gewichtsteile Acronal® S 312 D, 150 Gewichtsteile Acronal® 500 D und 100 Gewichtsteile Acronal® DS 3476 zugesetzt und der Ansatz für etwa 5 min gerührt.

Anschließend wird der Ansatz mit 70 Gewichtsteilen einer 50 %-igen Aluminiumsulfatlösung koaguliert.

Anschließend wurden 5 Gewichtsteile Hedifix® L 50 (Firma Kolb AG, 45 Gew.-% Wirksubstanz) sowie ein Gewichtsteil Präventol® A 11 D (45 Gew.-% Aktivsubstanz) zugesetzt und der Ansatz für weitere 60 min gerührt/stehengelassen.

Nach Entwässerung und Trocknung wies das entstehende Material die in Tabelle 1 aufgelisteten Meßwerte auf:

| Type | M L | Prüfung |
|---|---|---|
| Materialstärke mm | 0,60 | Frank Dickenmesser DIN 53326 / IUP 4 |
| spezifisches Gewicht g/cm³ | 0,85 - 0,95 | DIN 53327 / IUP 5 |
| Reißfestigkeit trocken MPa | 15,0 | DIN 53328 / IUP 6 |
| Dehnung trocken % | 25 | DIN 53328 / IUP 6 |
| Stichausreissfestigkeit N/mm | 30 | DIN 53331 100mm/Min. |

Temperaturbeständigkeit: Dauerbelastung mind. 80°C
   Kurzzeitbelastung bis 200°C
Thermoplastische Verformbarkeit: 80-120°C

### Beispiel 2:

Ein Klebstoff zur Verklebung des erfindungsgemäßen LEFA-Materials mit der zu beschichtenden Oberfläche wurde aus 60 Gew.-% Dispercoll U 53, 20 Gew.-% Quiacryl 126-07, 17 Gew.-% Vinnapas-Dispersion EP-17 sowie insgesamt 3 Gew.-% Netzmittel, Verdickungsmittel, Entschäumer und Konservierungsmittel hergestellt. Der Klebstoff gewährleistete eine dauerhafte Verbindung zwischen LEFA-Material und einer Oberfläche aus Preßspanmaterial.

## Patentansprüche

1. Thermoplastisches Verbundmaterial, enthaltend
a) mindestens 15 Gew.-% eines organischen Fasermaterials oder eines Gemischs aus zwei oder mehr organischen Fasermaterialien als Komponente A wobei die Fasern der Komponente A eine gestreckte Länge von 0,1 bis 15 mm aufweisen
und
b) mindestens 15 Gew.-% eines thermoplastischen Bindemittels als Komponente B, wobei das Bindemittel mindestens zwei verschiedene Polyacrylate enthält
**dadurch gekennzeichnet, daß** und das thermoplastische Verbundmaterial einen Fließübergangsbereich zwischen 70°C und 130°C aufweist.

2. Verbundmaterial nach Anspruch 1, **dadurch gekennzeichnet, daß** es mehr als 50 Gew.-% organisches Fasermaterial als Komponente A enthält.

3. Verbundmaterial nach Anspruch 1 oder 2, **dadurch gekennzeichnet, daß** es mindestens 30 Gew.-% thermoplastisches Bindemittel als Komponente B enthält.

4. Verbundmaterial nach einem der vorstehenden Ansprüche, **dadurch gekennzeichnet, daß** das thermoplastische Bindemittel zu mindestens 85 Gew.-% Polyacrylat enthält.

5. Verbundmaterial nach einem der vorstehenden Ansprüche, **dadurch gekennzeichnet, daß** das thermoplastische Bindemittel zu mindestens 40 Gew.-% ein Copolymeres aus n-Butylacrylat und Styrol enthält.

6. Verbundmaterial nach einem der vorstehenden Ansprüche, **dadurch gekennzeichnet, daß** es gegebenenfalls bis zu 15 Gew.-% anorganische Salze, kationische Polymere, Konservierungsmittel, Farbstoffe, natürliche und/oder synthetische Fette, Paraffine, natürliche und/oder synthetische Öle, Siliconöle, ionische und/oder nichtionische Tenside enthält.

7. Verbundmaterial nach einem der vorstehenden Ansprüche, **dadurch gekennzeichnet, daß** als Komponente A Kunststoffasern, Pflanzenfasern oder tierische Fasern enthalten sind.

8. Verbundmaterial nach einem der vorstehenden Ansprüche, **dadurch gekennzeichnet, daß** als Komponente A Lederfasern enthalten sind.

9. Verfahren zur Herstellung eines thermoplastischen Verbundmaterials, enthaltend
a) mindestens 15 Gew.-% eines organischen Fasermaterials oder eines Gemischs aus zwei oder mehr organischen Fasermaterialien als Komponente A
und
b) mindestens 15 Gew.-% eines thermoplastischen Bindemittels als Komponente B,
**dadurch gekennzeichnet, daß** die Komponente A, aus Fasern mit einer gestreckten Faserlänge von 0,1 bis 15 mm, gleichzeitig oder in beliebiger Reihenfolge aufeinanderfolgend mit mindestens einer anionischen Polymerdispersion und mindestens eine kationischen Polymerdispersion, die zusammen die Komponente B bilden, versetzt, und anschließend mit einer wäßrigen Lösung eines Aluminium- oder eines Kupfersalzes behandelt, entwässert und getrocknet wird, so daß das Verbundmaterial einen Fließ übergangsbereich zwischen 70°C und 130°C aufweist.

10. Verfahren nach Anspruch 9, **dadurch gekennzeichnet, daß** die Zugabe der mindestens einen anionischen Polymerdispersion und die Zugabe der mindestens einen kationischen Polymerdispersion in beliebiger Reihenfolge nacheinander, erfolgt.

11. Verfahren nach Anspruch 9 oder 10, **dadurch gekennzeichnet, daß** als Salz eine wäßrige Lösung von Aluminiumsulfat eingesetzt wird und danach mindestens ein kationisch geladenes Polymeres mit einem Molekulargewicht von 1000 bis 500.000 zugegeben wird.

12. Verfahren zur Oberflächenbeschichtung eines Gegenstands, indem der Gegenstand und ein thermoplastisches Material auf eine Temperatur oberhalb der Fließübergangsgrenze des thermoplastischen Materials erhitzt werden, das thermoplastische Material auf den Gegenstand aufgebracht wird, und der Gegenstand und das thermoplastisches Material anschließend auf eine Temperatur unterhalb der Fließübergangsgrenze des thermoplastischen Materials abgekühlt werden, **dadurch gekennzeichnet, daß** als thermoplastisches Material ein thermoplastisches Verbundmaterial gemäß einem der Ansprüche 1 bis 8, oder ein thermoplastisches Verbundmaterial, hergestellt gemäß einem der Ansprüche 9 bis 11, eingesetzt wird.

13. Verfahren nach Anspruch 12, **dadurch gekennzeichnet, daß** die Gegenstände Einrichtungsgegenstände sind.

14. Verfahren nach Anspruch 12 oder 13, **dadurch gekennzeichnet, daß** die Gegenstände Möbel, Möbelteile, Wand- und/oder Deckenpaneele sind.

15. Verfahren nach einem der Ansprüche 12 bis 14, **dadurch gekennzeichnet, daß** zum Erreichen einer dauerhaften Befestigung zwischen Oberflächenbeschichtungsmaterial und zu beschichtender Oberfläche ein Klebstoff, mindestens enthaltend
- etwa 40 bis 100 Teile einer wäßrigen Polyesterpolyurethandispersion,
- etwa 20 bis 40 Teile einer wäßrigen Polyacrylsäureesterdispersion,
- etwa 15 bis etwa 30 Teile eines EVA-copolymeren,
- gegebenenfalls bis zu etwa 0,5 Gew.-% Netzmittel,
- gegebenenfalls bis zu etwa 0,5 Gew.-% Entschäumer,
- gegebenenfalls bis zu etwa 0,5 Gew.-% Konservierungsmittel und
- etwa 0,5 bis etwa 2 Gew.-% Verdickungsmittel,
eingesetzt wird.

## Claims

1. A thermoplastic composite material containing
a) at least 15% by weight of an organic fibrous material or of a mixture of two or more organic fibrous materials as component A , the fibers of component A having a stretched length of about 0.1 to about 15 mm and
b) at least 15% by weight of a thermoplastic binder as component B, whereby the binder contains at least two different polyacrylates,
**characterized in that** the thermoplastic composite material has a flow transition range of 70°C to 130°C.

2. A composite material as claimed in claim 1, **characterized in that** it contains more than 50% by weight of organic fibrous material as component A.

3. A composite material as claimed in claim 1 or 2, **characterized in that** it contains at least 30% by weight of thermoplastic binder as component B.

4. A composite material as claimed in any of the preceding claims, 20 **characterized in that** the thermoplastic binder contains at least 85% by weight of polyacrylate.

5. A composite material as claimed in any of the preceding claims, **characterized in that** the thermoplastic binder contains at least 40% by weight of a copolymer of n-butyl acrylate and styrene.

6. A composite material as claimed in any of the preceding claims, **characterized in that** it optionally contains up to 15% by weight of inorganic salts, cationic polymers, preservatives, dyes, natural and/or synthetic fats, paraffins, natural and/or synthetic oils, silicone oils, ionic and/or nonionic surfactants.

7. A composite material as claimed in any of the preceding claims,
**characterized in that** it contains synthetic fibers, vegetable fibers or animal fibers as component A.

8. A composite material as claimed in any of the preceding claims, **characterized in that** it contains leather fibers as component A.

9. A process for the production of a thermoplastic composite material containing
a) at least 15% by weight of an organic fibrous material or of a mixture of two or more organic fibrous materials as component A
and
b) at least 15% by weight of a thermoplastic binder as 15 component B,
**characterized in that** at least one anionic polymer dispersion and at least one cationic polymer dispersion, which together form component B, are added simultaneously or successively in any order to component A of fibers with a stretched fiber length of 0.1 to 15 mm, followed by treatment with an aqueous solution of an aluminium salt or a copper salt, drainage and drying, whereby the composite material has a flow transition range of 70°C to 130°C.

10. A process as claimed in claim 9, **characterized in that** the at least one anionic polymer dispersion and the at least one cationic polymer dispersion are successively added in any order.

11. A process as claimed in claim 9 or 10, **characterized in that** an aqueous solution of aluminium sulfate is used as the salt and at least one cationically charged polymer with a molecular weight of 1,000 to 500,000 is subsequently added.

12. A process for the surface coating of an object in which the object and a thermoplastic material are heated to a temperature above the flow transition limit of the thermoplastic material, the thermoplastic material is applied to the object and the object and thermoplastic material are subsequently cooled to a temperature below the flow transition limit of the thermoplastic material, **characterized in that** the thermoplastic composite material claimed in any of claims 1 to 8 or a thermoplastic composite material produced by the process claimed in any of claims 9 to 11 is used as the thermoplastic material.

13. A process as claimed in claim 12, **characterized in that** the objects are furnishing items.

14. A process as claimed in claim 12 or 13, **characterized in that** the objects are furniture, parts of furniture, wall and/or ceiling panels.

15. A process as claimed in any of claims 12 to 14, **characterized in that** an adhesive at least containing
- about 40 to 100 parts of an aqueous polyester polyurethane dispersion,
- about 20 to 40 parts of an aqueous polyacrylate dispersion,
- about 15 to about 30 parts of an EVA copolymer,
- optionally up to about 0.5% by weight of wetting agent,
- optionally up to about 0.5% by weight of defoamer,
- optionally up to about 0.5% by weight of preservative and
- about 0.5 to about 2% by weight of thickener,
is used to establish a permanent bond between the surface coating material and the surface to be coated.

## Revendications

1. Matériau composite thermoplastique contenant :
a) au moins 15 % en poids d'un matériau fibreux organique ou un mélange à base de deux ou davantage matériaux fibreux organiques en tant que composant A dans lequel les fibres du composant A possèdent une longueur étirée, allant de 0,1 à 15 mm, et
b) au moins 15 % en poids d'un agent liant thermoplastique en tant que composant B dans lequel l'agent liant renferme au moins deux polyacrylates différents,
**caractérisé en ce que**
le matériau composite thermoplastique possède une zone de transition d'écoulement comprise entre 70°C et 130°C.

2. Matériau composite selon la revendication 1,
**caractérisé en ce qu'**
il contient plus de 50 % en poids de matériau fibreux organique en tant que composant A.

3. Matériau composite selon la revendication 1 ou la revendication 2,
**caractérisé en ce qu'**
il renferme au moins 30 % en poids d'agent liant thermoplastique en tant que composant B.

4. Matériau composite selon l'une quelconque des revendications précédentes.
**caractérisé en ce que**
l'agent liant thermoplastique contient pour au moins 85 % en poids de polyacrylate.

5. Matériau composite selon l'une quelconque des revendications précédentes,
**caractérisé en ce que**
l'agent liant thermoplastique contient pour au moins 40 % en poids d'un copolymère à base d'acrylate de n-butyle et de styrène.

6. Matériau composite selon l'une quelconque des revendications précédantes,
**caractérise en ce qu'**
il renferme le cas échéant jusqu'a 15 % en poids de sels minéraux, de polymères cationiques, d'agents conservateurs, de colorants, de graisses naturelles et/ ou synthétiques, de paraffines, d'huiles naturelles et/ou synthétiques, d'huiles de silicone, d'agents tensioactifs ioniques et/ ou non ioniques.

7. Matériau composite selon l'une quelconque des revendications précédantes,
**caractérise en ce que**
comme composant A, des fibres de matière plastique, des fibres végétales ou des fibres animales sont présentes.

8. Matériau composite selon l'une quelconque des revendications précédantes,
**caractérise en ce que**
comme composant A des fibres de cuir sont présentes.

9. Procède de préparation d'un matériau composite thermoplastique contenant:
a) au moins 15 % en poids d'un matériau fibreux organique ou d'un mélange a base de deux ou davantage de matériaux fibreux organiques en tant que composant A, et
b) au moins 15 % en poids d'un agent liant thermoplastique en tant que composant B,
**caractérise en ce que**
le composant A à base de fibres ayant une longueur de fibre étirée de 0,1 à 15 mm est mélangé en même temps ou dans n'importe quelle succession, successivement avec au moins une dispersion de polymère anionique, qui forment ensemble le composant B et on traite ensuite avec une solution aqueuse d'un sel d'aluminium ou de cuivre, on déshydrate et on sèche, de façon à ce que le matériau composite possède une zone de transition d'écoulement comprise entre 70°C et 130°C.

10. Procédé selon la revendication 9,
**caractérisé en ce que**
l'addition d'au moins une dispersion de polymère anionique et l'addition d'au moins une dispersion de polymère cationique, s'effectue consécutivement dans n'importe quelle succession.

11. Procédé selon la revendication 9 ou la revendication 10,
**caractérisé en ce qu'**
on met en oeuvre comme sel une solution aqueuse de sulfate d'aluminium et ensuite on ajoute au moins un polymère chargé cationiquement ayant un poids moléculaire de 1000 à 500.000.

12. Procédé de revêtement de la surface d'un objet, selon lequel l'objet et un matériau thermoplastique sont chauffés à une température au-dessus de la limite de transition d'écoulement du matériau thermoplastique, le matériau thermoplastique est appliqué sur l'objet et l'objet et le matériau thermoplastique sont ensuite refroidis à une température en dessous de la limite de transition d'écoulement du matériau thermoplastique,
**caractérisé en ce qu'**
on met en oeuvre comme matériau thermoplastique un matériau composite thermoplastique conformément à l'une quelconque des revendications 1 à 8, ou un matériau composite thermoplastique préparé conformément à l'une quelconque des revendications 9 à 11.

13. Procédé selon la revendication 12,
**caractérisé en ce que**
les objets sont des objets d'ameublement.

14. Procédé selon la revendication 12 ou la revendication 13,
**caractérisé en ce que**
les objets sont des meubles, des pièces de meuble, des panneaux de cloison et/ou de couverture.

15. Procédé selon l'une quelconque des revendications 12 à 14,
**caractérisé en ce que**
pour obtenir une fixation durable entre le matériau de revêtement de surface et les surfaces à enduire, on met en oeuvre une colle qui contient au moins :
- environ 40 à 100 parties d'une dispersion aqueuse de polyesterpolyurétane,
- environ 20 à 40 parties d'une dispersion aqueuse d'ester d'acide polyacrylique,
- environ 15 à environ 30 parties d'un copolymère d'EVA,
- le cas échéant jusqu'à environ 0,5 % d'un agent de réticulation,
- le cas échéant jusqu'à environ 0,5 % en poids d'un agent anti-mousse.
- le cas échéant jusqu'à environ 0,5 % d'un agent conservateur, et
- environ de 0,5 à environ 2 % en poids d'un agent épaississant.
